(19) Europäisches Patentamt
European Patent Office
Office européen des brevets

(11) **EP 3 611 582 A1**

(12) **EUROPÄISCHE PATENTANMELDUNG**

(43) Veröffentlichungstag:
**19.02.2020 Patentblatt 2020/08**

(51) Int Cl.:
***G05B 19/18*** *(2006.01)*     ***G05B 19/404*** *(2006.01)*
***G05B 19/401*** *(2006.01)*     ***B29C 33/38*** *(2006.01)*

(21) Anmeldenummer: **19000362.4**

(22) Anmeldetag: **05.08.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **15.08.2018 DE 102018006399**

(71) Anmelder:
• **WENZEL Präzision GmbH**
  **97859 Wiesthal (DE)**

• **WENZEL Metrology GmbH**
  **97859 Wiesthal (DE)**

(72) Erfinder: **JAUMANN, Ralf**
  **72336 Balingen (DE)**

(74) Vertreter: **Weidner Stern Jeschke**
  **Patentanwälte Partnerschaft mbB**
  **Universitätsallee 17**
  **28359 Bremen (DE)**

(54) **VERFAHREN UND VORRICHTUNG ZUM HERSTELLEN EINES URFORM- ODER UMFORMWERKZEUGS SOWIE VERFAHREN ZUM FERTIGEN EINES BAUTEILS**

(57)    Bei einem erfindungsgemäßen Verfahren zum Herstellen eines Urform- oder Umformwerkzeugs für ein Bauteil wird ein Soll-Oberflächenmodells des Bauteils bereitgestellt, ein erstes Modifikationsmodell des Werkzeugs aufgrund von vorbekannten Eigenschaften des Bauteils und/oder des Fertigungsprozesses erstellt, ein erstes Oberflächenmodell des Werkzeugs durch Modifizieren des Soll-Oberflächenmodells des Bauteils mit dem ersten Modifikationsmodell erstellt, eine erste Ausführung des Werkzeugs entsprechend dem ersten Oberflächenmodell hergestellt, eine erste Ausführung des Bauteils mit der ersten Ausführung des Werkzeugs gefertigt, die Kontur der ersten Ausführung des Bauteils erfasst, Abweichungen zwischen der erfassten Kontur der ersten Ausführung des Bauteils und dem Soll-Oberflächenmodell des Bauteils ermittelt, ein zweites Modifikationsmodell aufgrund der ermittelten Abweichungen und dem ersten Modifikationsmodell erstellt, ein zweites Oberflächenmodell des Werkzeugs durch Modifizieren des ersten Oberflächenmodells mit dem zweiten Modifikationsmodell erstellt und eine zweite Ausführung des Werkzeugs entsprechend dem zweiten Oberflächenmodell hergestellt. Die Erfindung betrifft auch eine Vorrichtung zum Herstellen eines Urform- oder Umformwerkzeugs für ein Bauteil sowie ein Verfahren zum Fertigen eines Bauteils mittels eines urform- oder umformtechnischen Herstellungsprozesses.

Fig. 1

**Beschreibung**

Die vorliegende Erfindung betrifft ein Verfahren und eine Vorrichtung zum Herstellen eines Urform- oder Umformwerkzeugs für ein zu fertigendes Bauteil. Weiter betrifft die Erfindung ein Verfahren zum Fertigen eines Bauteils mittels eines urform- oder umformtechnischen Herstellungsprozesses.

Die Verwendung von Urform- und Umformwerkzeugen ist bei der industriellen Herstellung von Bauteilen weit verbreitet. So werden insbesondere viele Bauteile im Bereich der Automobiltechnik, aber auch im Konsumgüterbereich mittels urform- oder umformtechnischer Herstellungsprozesse gefertigt.

Ein Urformwerkzeug kann beispielsweise als Gussform für die Fertigung von gusstechnisch hergestellten, insbesondere in Spritzgusstechnik gefertigten Bauteilen verwendet werden. Dabei bestimmt die Innenkontur der Gussform die Außenkontur des hergestellten Bauteils. Das Bauteil kann eine mehr oder weniger komplexe Kontur aufweisen und kann beispielsweise eine äußere Oberfläche mit Bereichen niedriger und mit Bereichen hoher Krümmung aufweisen, wobei sowohl konvex als auch konkav geformte Oberflächenbereiche vorhanden sein können. Ebenso kann das Bauteil Abschnitte unterschiedlicher Materialstärke aufweisen. Das Bauteil kann auch innere Oberflächen haben, wie etwa Hohlräume.

Umformwerkzeuge werden zum Umformen von Bauteilen verwendet, wobei die erzeugte Kontur des Bauteils in entsprechender Weise durch die Kontur des Umformwerkzeugs bestimmt wird. Umformwerkzeuge werden bei umformtechnischen Herstellungsprozessen, etwa beim Tiefziehen, verwendet. Dabei wird die Kontur des hergestellten Bauteils ebenfalls durch die des Werkzeugs bestimmt.

Näherungsweise kann das Urform- bzw. Umformwerkzeug als eine Negativform des zu fertigenden Bauteils angesehen werden. In der Praxis hat sich jedoch gezeigt, dass mit einem Urform- oder Umformwerkzeug, das genau entsprechend der Sollkontur des Bauteils hergestellt worden ist, kein form- und maßhaltiges Bauteil gefertigt werden kann. Stattdessen treten in der Regel Schwund und/oder Verzug auf, wodurch Abweichungen zwischen der Sollkontur des Bauteils und der Kontur eines Bauteils, das mit einem der Sollkontur entsprechenden Werkzeug gefertigt worden ist, entstehen. Diese Abweichungen sind besonders schwerwiegend bei Bauteilen mit hohen Genauigkeitsanforderungen, wie diese in vielen Anwendungsbereichen bei Gussteilen oder Kunststoffspritzgussbauteilen bestehen. Es sind daher Verfahren beschrieben worden, um Schwund und Verzug bei urformtechnischen Herstellungsverfahren zu kompensieren.

Aus EP 2 313 867 B1 ist ein Verfahren zum Herstellen eines Urformwerkzeugs für ein Bauteil bekannt, wobei ein CAD-Modell des Bauteils empfangen oder erstellt wird, ein Oberflächenmodell für das Urformwerkzeug anhand des CAD-Modells des Bauteils abgeleitet wird, das Urformwerkzeug mittels NC-Maschinen unter Verwendung des Oberflächenmodells erstellt wird und eine Entität des Bauteils mit dem Urformwerkzeug gefertigt wird. Weiter werden gemäß dem bekannten Verfahren die Konturen der Entität des Bauteils mittels eines Computertomografie-basierten Koordinatenmessgeräts erfasst, die 3D-Punkte der dadurch gelieferten 3D-Punktewolke von Oberflächenpunkten der Entität des Bauteils mit dem CAD-Modell verglichen und ermittelt, ob Abweichungen oberhalb vorfestgelegter Toleranzgrenzen existieren. Falls dieses der Fall ist, wird das Oberflächenmodell anhand der ermittelten Abweichungen modifiziert, wobei korrigierte 3D-Punkte ermittelt werden, die das modifizierte Oberflächenmodell festlegen, wobei die erfassten 3D-Punkte der 3D-Punktewolke entsprechend ihrer ermittelten Abweichung von einem ihnen jeweils entsprechenden Punkt einer Solloberfläche an der durch das Oberflächenmodell festgelegten Oberfläche des Urformwerkzeugs gespiegelt werden. Sodann wird das Urformwerkzeug nachbearbeitet oder neu erstellt anhand des modifizierten Oberflächenmodells, es wird eine weitere Entität des Bauteils mit dem nachbearbeiteten oder neu erstellten Urformwerkzeug gefertigt, und die weiteren Schritte werden wiederholt, bis keine Abweichungen oberhalb der vorfestgelegten Toleranzgrenzen existieren. Dabei können beim Ermitteln der korrigierten 3D-Punkte Materialeigenschaften des zur Fertigung des Bauteils verwendeten Materials, Parameter des Fertigungsverfahrens, und/oder eine lokale Geometrie berücksichtigt werden.

Gemäß DE 10 2011 121 695 A1 umfasst ein Verfahren zum Herstellen eines Bauteils mittels Urformen die Schritte: Bereitstellen einer mathematischen Beschreibung oder eines CAD-Modells des herzustellenden Bauteils; Herstellen eines Urformwerkzeugs mittels der mathematischen Beschreibung oder des CAD-Modells; Fertigen eines ersten Abformteils mittels des Urformwerkzeugs; dreidimensionales Vermessen des Abformteils, welches eine 3D-Punktewolke liefert, und Bestimmen einer Formabweichung des Abformteils anhand eines Vergleichs der 3D-Punktewolke des Abformteils mit der mathematischen Beschreibung oder dem CAD-Modell; Bestimmen einer Formabweichung einer Fläche des Urformwerkzeuges; Nachbearbeiten oder Neuerstellen des Urformwerkzeuges; Bestimmen einer Formabweichung der Fläche des Urformwerkzeuges; Berechnen einer neuen Fläche des Urformwerkzeugs anhand der genannten Formabweichungen; und Nachbearbeiten oder Neuerstellen eines Urformwerkzeuges anhand der neuen Fläche. Dabei wird eine Differenz von Formabweichungen des Urformwerkzeugs einbezogen, die daher resultiert, dass sich die Form des Urformwerkzeugs, insbesondere in einem Neuzustand, ändern kann.

In DE 10 2016 207 821 A1 ist ein Verfahren zur Herstellung einer Form offenbart, das die Feststellung einer Faserorientierung für eine Vielzahl von Punkten in einem Teil mittels eines Prozessors, die Feststellung eines Verformungswerts auf der Grundlage der Faserorientierungen durch den Prozessor und die Erstellung von Formabmessungen auf der Grundlage der Verformungswerte durch den Prozessor beinhaltet. Dabei berechnet ein System zur Vorausberechnung von Verformungen eine zu erwartende Verformung auf der Grundlage von geschätzten mechanischen und thermischen Eigenschaften des Teils.

Es hat sich gezeigt, dass mit bekannten Verfahren je nach gestellten Genauigkeitsanforderungen häufig eine Vielzahl von Iterationen notwendig ist, bis ein ausreichend maßhaltiges Bauteil mit dem Urformwerkzeug gefertigt werden kann. Zudem ist das im ersten Schritt anhand des CAD-Modells des Bauteils erstellte Urformwerkzeug in der Regel verloren, da das hiermit hergestellte Bauteil oft so große Abweichungen von der Sollkontur des Bauteils aufweist, dass eine Nachbearbeitung des Urformwerkzeugs entsprechend den ermittelten Abweichungen nicht möglich ist, sondern eine Neuerstellung des Urformwerkzeugs notwendig ist.

Es ist die Aufgabe der vorliegenden Erfindung, ein Verfahren und eine Vorrichtung zum Herstellen eines Urform- oder Umformwerkzeugs für ein zu fertigendes Bauteil anzugeben, wobei die oben genannten Nachteile möglichst vermieden werden und womit es insbesondere ermöglicht wird, ein form- und maßhaltiges Bauteil in weniger Iterationen und/oder mit geringerem Aufwand herzustellen. Weiter ist es Aufgabe der Erfindung, ein verbessertes Verfahren zum Fertigen eines Bauteils mittels eines urform- oder umformtechnischen Herstellungsprozesses anzugeben.

Diese Aufgabe wird durch ein Verfahren gemäß Anspruch 1, durch eine Vorrichtung gemäß Anspruch 10 und durch ein Verfahren zum Fertigen eines Bauteils gemäß Anspruch 11 gelöst.

Vorteilhafte Weiterbildungen der Erfindung ergeben sich aus den Unteransprüchen.

Ein erfindungsgemäßes Verfahren dient zum Herstellen eines Urformwerkzeugs oder eines Umformwerkzeugs, welches zur Fertigung eines Bauteils mittels ur- bzw. umformtechnischer Fertigungsprozesse verwendet werden kann. Ein solches, mittels eines Urformwerkzeugs zu fertigendes urformtechnisches Bauteil kann beispielsweise ein Gussteil oder ein Spritzgussteil aus einem metallischen Werkstoff oder einem Kunststoff sein. Ein mittels des entsprechenden Umformwerkzeugs zu fertigendes Bauteil kann etwa ein durch Tiefziehen oder mit einem Biegeprozess aus einem Blechzuschnitt herzustellendes Bauteil sein. Sofern dies im Folgenden nicht näher angegeben ist, kann sich der Ausdruck "Werkzeug" auf ein Urformwerkzeug oder auf ein Umformwerkzeug beziehen; dementsprechend kann mit "Bauteil" sowohl ein urformtechnisch herzustellendes wie ein umformtechnisch herzustellendes Bauteil gemeint sein. Das erfindungsgemäße Verfahren ist insbesondere als ein zumindest teilweise automatisiertes Verfahren ausgestaltet.

Gemäß dem erfindungsgemäßen Verfahren wird zunächst ein Soll-Oberflächenmodell des zu fertigenden Bauteils bereitgestellt. Das Soll-Oberflächenmodell ist ein rechnerisches Modell, das die Sollkontur des Bauteils darstellt, d.h. dessen Sollform einschließlich der Sollmaße. Im Rahmen der vorliegenden Erfindung umfasst der Begriff "Kontur" stets eine Form und die entsprechenden Maße. Mit dem Ausdruck "Modell" wird hier ein rechnerisches Modell bezeichnet, das beispielsweise ein CAD-Modell des Bauteils bzw. des Werkzeugs sein kann und das etwa eine Menge von Oberflächenpunkten umfassen kann, die durch ihre dreidimensionalen Koordinaten gegeben sein können. Das Soll-Oberflächenmodell des Bauteils kann somit ein CAD-Modell des Bauteils sein, das in einem vorgelagerten Verfahrensschritt erstellt oder empfangen worden sein kann oder das in einer Speichereinrichtung gespeichert ist und für die Erstellung des Soll-Oberflächenmodells abgerufen werden kann. Das Soll-Oberflächenmodell kann aber auch beispielsweise durch Messen eines Musters des Bauteils, beispielsweise mit einem Koordinatenmessgerät oder einem computertomografischen Messgerät, erstellt werden.

Weiter wird erfindungsgemäß aufgrund von vorbekannten Eigenschaften des Bauteils und/oder des ur- bzw. umformtechnischen Fertigungsverfahrens ein erstes Modifikationsmodell des Werkzeugs erstellt. Derartige vorbekannte Eigenschaften sind insbesondere ein Material, aus dem das Bauteil zu fertigen ist, die Geometrie des Bauteils und/oder Prozessparameter bei der Fertigung des Bauteils mit dem Werkzeug. Materialeigenschaften, die hierbei berücksichtigt werden können, sind insbesondere der Wärmeausdehnungskoeffizient, die Wärmekapazität und die Fließeigenschaften des Materials. Geometrische Eigenschaften des Bauteils, die bei der Berechnung des ersten Modifikationsmodells eine Rolle spielen können, sind beispielsweise die Wandstärke von Wänden, Rippen oder anderen flächigen Strukturen, ggf. unter Berücksichtigung von Hohlräumen, oder die Krümmung von Oberflächenbereichen. Weiterhin können Prozessparameter der Fertigung des Bauteils mit dem Werkzeug herangezogen werden, wodurch etwa Fließprozesse beim Füllen einer Urform mit flüssigem Material oder der Temperaturverlauf bei der Fertigung des Bauteils, beispielsweise beim Abkühlen des in flüssiger Form in ein Urformwerkzeug eingebrachten Materials des Bauteils, beeinflusst werden. Das erste Modifikationsmodell umfasst mindestens einen Modifikationsvektor, der senkrecht auf der Oberfläche gemäß dem Soll-Oberflächenmodell steht und der eine Modifikation gegenüber dem Soll-Oberflächenmodell angibt. Vorzugsweise umfasst das erste Modifikationsmodell eine Vielzahl von Modifikationsvektoren, beispielsweise kann jedem Punkt des Soll-Oberflächenmodells ein Modifikationsvektor zugeordnet sein.

Das erste Modifikationsmodell ist insbesondere derart bestimmt, dass es eine solche Modifikation des Soll-Oberflächenmodells des Bauteils darstellt, durch die ein zu erwartender Schwund bzw. ein zu erwartender Verzug des Bauteils zumindest teilweise kompensiert wird, d.h. der bzw. die Modifikationsvektoren des ersten Modifikationsmodells sind nach Betrag und Richtung dem zu erwartenden Schwund bzw. Verzug entgegen gerichtet. In der Regel kann davon ausgegangen werden, dass bei der Fertigung des Bauteils mit urform- oder umformtechnischen Verfahren ein Schwund und/oder ein Verzug auftritt. Typischerweise ist es auch vorbekannt, ob hierdurch eine Vergrößerung oder eine Verkleinerung eines Maßes des Bauteils gegenüber einem entsprechenden Maß des Werkzeugs erfolgt, jedoch ist es aufgrund der Komplexität der bei der Fertigung des Bauteils ablaufenden Vorgänge kaum möglich, die Größe der Maß- bzw. Formänderung durch Schwund und/oder Verzug genau vorherzusagen. Das erste Modifikationsmodell stellt somit insbesondere eine Näherung zur teilweisen Kompensation des zu erwartenden Schwunds und/oder Verzugs des Bauteils beim ur- oder umformtechnischen Fertigungsprozess dar. Ein solches Modifikationsmodell kann beispielsweise mittels FEA (Finite-Elemente-Analyse) aufgrund der vorbekannten Eigenschaften des Bauteils und/oder des Fertigungsprozesses erstellt werden.

In einem weiteren Schritt des erfindungsgemäßen Verfahrens wird ein erstes Oberflächenmodell des Werkzeugs erstellt, indem das Soll-Oberflächenmodell mit dem ersten Modifikationsmodell modifiziert wird, insbesondere wird jeder Punkt des Soll-Oberflächenmodells entsprechend dem jeweils zugeordneten Modifikationsvektor im Raum verschoben. Das erste Oberflächenmodell des Urform- oder Umformwerkzeugs entspricht somit nicht genau dem Soll-Oberflächenmodell des Bauteils, sondern dem mit dem ersten Modifikationsmodell veränderten Soll-Oberflächenmodell. In dem Fall, dass das Werkzeug eine Negativform des Bauteils darstellt, etwa, wenn das urformtechnische Werkzeug eine Guss- oder Spritzgussform ist, ist daher die Innenkontur des Werkzeugs nicht genau gleich dem ersten Oberflächenmodell des Bauteils, das die äußere Oberfläche des Bauteils beschreibt, sondern unterscheidet sich von diesem gemäß dem ersten Modifikationsmodell, welches vorzugsweise derart bestimmt ist, dass Schwund und/oder Verzug, soweit zumindest eine Richtung dieser Effekte vorhersehbar ist, zumindest teilweise kompensiert werden.

Es wird sodann eine erste Ausführung des Werkzeugs entsprechend dem ersten Oberflächenmodell des Werkzeugs hergestellt. Hierfür kann in vorteilhafter Weise eine NC- oder CNC-Maschine verwendet werden, die entsprechend dem ersten Oberflächenmodell gesteuert wird.

Mit der ersten Ausführung des Werkzeugs wird in einem weiteren Schritt eine erste Ausführung des Bauteils gefertigt, beispielsweise durch Gießen, Spritzgießen, Pressen, Biegen oder andere urform- oder umformtechnische Herstellungsprozesse. Die erste Ausführung des Bauteils unterscheidet sich in ihrer Kontur von dem ersten Oberflächenmodell des Werkzeugs durch den Schwund und/oder den Verzug, welcher bei dem Herstellungsprozess des Bauteils auftritt.

Die tatsächliche Kontur des Bauteils, d.h. die Form und die Maße der Oberfläche der ersten Ausführung des Bauteils, die dieses beispielsweise nach Entnehmen aus einer Gussform und nach Abkühlung annimmt, wird in einem weiteren Verfahrensschritt messtechnisch erfasst. Hierfür werden etwa mit einem Koordinatenmessgerät oder mit einem computertomografischen Messgerät oder auch mit einem 3D-Scanner Messpunkte auf der Oberfläche des Werkstücks erfasst, wobei es vorgesehen sein kann, dass die Dichte der Messpunkte von der Geometrie der Oberfläche und/oder vom erwarteten Schwund bzw. Verzug abhängig ist. So kann beispielsweise das Verfahren derart ausgestaltet sein, dass in Bereichen hoher Krümmung der Oberfläche die Dichte der erfassten Punkte höher ist als in Bereichen geringer Krümmung. Ferner kann eine Glättung der erfassten Kontur vorgesehen sein, um messtechnisch bedingte Ungenauigkeiten zu minimieren.

Aufgrund der erfassten Messpunkte auf der Oberfläche, die als dreidimensionale Koordinaten vorliegen können, werden in einem weiteren Verfahrensschritt die Abweichungen zwischen der erfassten Kontur der ersten Ausführung des Bauteils, die auch als Ist-Kontur bezeichnet wird, und dem Soll-Oberflächenmodell des Bauteils, das die Sollkontur darstellt, ermittelt. Diese Abweichungen können beispielsweise punktweise berechnet werden, wobei die Punktdichte von der Oberflächengeometrie abhängen kann. Die Abweichungen sind insbesondere als Abweichungsvektoren gegeben, die senkrecht zur Fläche des Soll-Oberflächenmodells stehen und von einem Punkt des Soll-Oberflächenmodells zu einem entsprechenden Punkt der Ist-Kontur weisen.

Aufgrund der ermittelten Abweichungen zwischen der erfassten Kontur der ersten Ausführung des Bauteils und der Sollkontur des Bauteils sowie aufgrund des ersten Modifikationsmodells wird sodann ein zweites Modifikationsmodell des Werkzeugs erstellt. Insbesondere wird das zweite Modifikationsmodell nur aufgrund der ermittelten Abweichungen und dem ersten Modifikationsmodell bzw. den entsprechenden Abweichungsvektoren und Modifikationsvektoren berechnet. So kann es beispielsweise vorgesehen sein, dass in einer Mehrzahl von Punkten oder Oberflächenelementen der Sollkontur des Bauteils jeweils ein Abweichungsvektor der tatsächlichen, messtechnisch erfassten Kontur der ersten Ausführung des Bauteils in einem entsprechenden Oberflächenelement von der Sollkontur des Bauteils sowie ein entsprechender Modifikationsvektor des ersten Modifikationsmodells, der dem Oberflächenelement zugeordnet ist, ermittelt werden und aufgrund dieser Daten, insbesondere nur aufgrund dieser Daten, ein Modifikationsvektor des zweiten Modifikationsmodells berechnet wird, der dem betreffenden Oberflächenelement zugeordnet ist.

Das derart erstellte zweite Modifikationsmodell des Werkzeugs wird nun benutzt, um durch Modifizieren des ersten Oberflächenmodells ein zweites Oberflächenmodell des Werkzeugs zu erstellen. Dabei wird insbesondere für jeden Punkt oder für jedes Oberflächenelement des ersten Oberflächenmodells ein Modifikationsvektor des zweiten Modifikationsmodells berechnet, der parallel zum entsprechenden Modifikationsvektor des ersten Modifikationsmodells ist und der die Veränderung des zweiten Oberflächenmodells gegenüber dem ersten Oberflächenmodell darstellt.

Entsprechend dem zweiten Oberflächenmodell des Werkzeugs wird eine zweite Ausführung des Werkzeugs hergestellt, etwa mit Hilfe einer NC- oder CNC-Maschine, die mit dem zweiten Oberflächenmodell angesteuert wird. Vorzugsweise kann die zweite Ausführung des Werkzeugs durch Nachbearbeitung der ersten Ausführung des Werkzeugs hergestellt werden, etwa durch Materialabtrag an der Oberfläche des Werkzeugs.

Mit der zweiten Ausführung des Werkzeugs kann eine zweite Ausführung des Bauteils gefertigt werden, wobei wiederum der entsprechende urform- bzw. umformtechnische Herstellungsprozess zur Anwendung kommt. Die zweite Ausführung des Bauteils entspricht in Form und Maßen der Sollkontur des Bauteils genauer als die erste Ausführung des Bauteils, häufig weist es bereits eine ausreichende Genauigkeit auf.

Mit dem erfindungsgemäßen Verfahren wird eine industriell anwendbare Prozesskette geschaffen, mit der urform- oder umformtechnische Bauteile weitgehend frei von Schwund und Verzug hergestellt werden können. Vorzugsweise können dabei alle Verfahrensschritte zumindest teilweise automatisiert ablaufen. Ferner kann es vorgesehen sein, dass eine jeweilige Ausführung des Werkzeugs ebenfalls etwa mit einem Koordinatenmessgerät oder mit einem computertomografischen Messgerät oder auch mit einem 3D-Scanner vermessen wird, um sicherzustellen, dass dieses dem jeweiligen Oberflächenmodell des Werkzeugs entspricht. Hierdurch kann auf einfache, prozesssichere und kostengünstige Weise eine Fertigung von urform- oder umformtechnischen Bauteilen mit hoher Formgenauigkeit und hoher Maßhaltigkeit erreicht werden.

Erfindungsgemäß ist erkannt worden, dass dadurch, dass das zweite Oberflächenmodell des Werkzeugs durch Modifizieren des ersten Oberflächenmodells mit einem zweiten Modifikationsmodell entsteht, das aufgrund der ermittelten Abweichungen zwischen der Ist-Kontur der ersten Ausführung des Bauteils und der Sollkontur des Bauteils sowie aufgrund des ersten Modifikationsmodells erstellt worden ist, eine weitergehende Kompensation von Schwund und/oder Verzug ermöglicht wird. Insbesondere ist erkannt worden, dass es ausreichend sein kann, das zweite Modifikationsmodell allein aufgrund der ermittelten Abweichungen und des ersten Modifikationsmodells zu erstellen. Dabei werden beispielsweise nicht die Materialeigenschaften des zur Fertigung des Bauteils verwendeten Materials und ebenso keine Parameter des zur Fertigung des Bauteils verwendeten Fertigungsverfahrens verwendet, und ebenso wird keine lokale Geometrie verwendet, sondern stattdessen nur die ermittelten Abweichungen und das erste Modifikationsmodell. Dies ist deshalb besonders vorteilhaft, weil es in der Regel nicht möglich ist, aufgrund vorbekannter Eigenschaften des Bauteils und/oder des Herstellungsprozesses die durch Schwund bzw. Verzug hervorgerufenen Abweichungen des Bauteils von der Sollkontur genau vorherzusagen. Die Verwendung des ersten Modifikationsmodells bei der Erstellung des zweiten Modifikationsmodells aufgrund der ermittelten Abweichungen ermöglicht es, unabhängig von solchen Vorhersagen ein modifiziertes Werkzeug zu erstellen, das eine genauere Kompensation von Schwund und/oder Verzug ermöglicht. Dabei wird ausgenutzt, dass die ermittelten Abweichungen bereits Material- und Prozesseigenschaften widerspiegeln, die zur Kompensation von Schwund und/oder Verzug genutzt werden können. Hierdurch kann mit weniger Verfahrensschritten und somit in kürzerer Zeit und mit geringerem Nachbearbeitungsaufwand zu einer weitgehend schwund- und verzugskompensierten Ausführung des Urform- bzw. Umformwerkzeugs gelangt werden.

Das erfindungsgemäße Verfahren kann zusätzliche Schritte umfassen, beispielsweise Handhabungsschritte, die ebenfalls zumindest teilweise automatisiert sein können. Ferner kann eine Teilabfolge von Schritten ein- oder mehrfach wiederholt werden.

Gemäß einer bevorzugten Ausführungsform der Erfindung wird ein Modifikationsvektor des zweiten Modifikationsmodells als gespiegelter und zu einem entsprechenden Punkt des ersten Oberflächenmodells verschobener Vektor bestimmt, der der Abweichung zwischen der Sollkontur, d.h. dem Soll-Oberflächenmodell des Bauteils, und der erfassten Kontur der ersten Ausführung des Bauteils entspricht, wobei der Betrag des Vektors zusätzlich insbesondere um einen Faktor verändert wird, der von dem Betrag der Abweichung zwischen dem ersten Oberflächenmodell und der erfassten Ist-Kontur der ersten Ausführung des Bauteils abhängt. Dieser Faktor kann ungleich 1 sein und kann beispielsweise von dem Betrag der Abweichung zwischen der Ist-Kontur und der Soll-Kontur und von dem Betrag der Abweichung zwischen dem ersten Oberflächenmodell und der Ist-Kontur abhängen. Das zweite Modifikationsmodell umfasst somit einen Modifikationsvektor, der der Richtung der Abweichung der erfassten Kontur von der Sollkontur des Bauteils entgegengerichtet ist und dessen Betrag beispielsweise von dem Betrag der Abweichung zwischen dem ersten Oberflächenmodell und der erfassten Kontur der ersten Ausführung des Bauteils abhängt. Insbesondere umfasst das zweite Modifikationsmodell für eine Vielzahl von Oberflächenpunkten des ersten Oberflächenmodells jeweils einen solchen Modifikationsvektor. Hierdurch kann auf einfache Weise ein Werkzeug hergestellt werden, das eine besonders form- und maßgenaue Fertigung des Bauteils ermöglicht.

Vorzugsweise werden nach dem oben letztgenannten Schritt des erfindungsgemäßen Verfahrens, also nach dem Fertigen der zweiten Ausführung des Werkzeugs, der Schritt des Fertigens des Bauteils mit dem Werkzeug sowie die nachfolgenden Schritte einmal oder in mehrfachen Durchläufen wiederholt. Dies bedeutet, dass in den genannten Verfahrensschritten eine zweite Ausführung des Bauteils mit der zweiten Ausführung des Werkzeugs gefertigt wird, die Kontur der zweiten Ausführung des Bauteils erfasst wird, dass weiter die Abweichungen zwischen der erfassten Kontur der zweiten Ausführung des Bauteils und dem Soll-Oberflächenmodell des Bauteils ermittelt werden und dass sodann ein drittes Modifikationsmodell aufgrund der ermittelten Abweichungen und dem zweiten Modifikationsmodell erstellt wird. Weiter wird ein drittes Oberflächenmodell des Werkzeugs durch Modifizieren des zweiten Oberflächenmodells mit dem dritten Modifikationsmodell erstellt, und sodann wird eine dritte Ausführung des Werkzeugs entsprechend dem dritten Oberflächenmodell hergestellt. Entsprechend können die genannten Verfahrensschritte ein oder mehrere weitere Male nacheinander durchlaufen werden, wobei die Ordnungsnummern der Modelle und Ausführungen jeweils um eins erhöht werden. Derartige aufeinander folgende Durchläufe der genannten Verfahrensschritte werden hier als "Iterationen" bezeichnet. Hierdurch kann eine Ausführung des Werkzeugs hergestellt werden, die eine besonders genaue form- und maßhaltige Fertigung des Bauteils ermöglicht.

In vorteilhafter Weise wird dabei ein Modifikationsvektor des dritten Modifikationsmodells als gespiegelter und zu einem entsprechenden Punkt des zweiten Oberflächenmodells verschobener Vektor bestimmt, der der Abweichung zwischen der Sollkontur und der erfassten Kontur der zweiten Ausführung des Bauteils entspricht, wobei der Betrag des Vektors zusätzlich um einen Faktor verändert wird, der von der Abweichung zwischen dem ersten und dem zweiten Oberflächenmodell, d.h. vom zweiten Modifikationsmodell, und der Abweichung zwischen der erfassten Kontur der ersten und der zweiten Ausführung des Bauteils abhängt. Dieser Faktor kann ungleich 1 sein und in bevorzugter Weise etwa dem Verhältnis der Beträge der entsprechenden Vektoren entsprechen, d.h. des Modifikationsvektors des zweiten Modifikationsmodells und des Abweichungsvektors, der von der Ist-Kontur der ersten Ausführung des Bauteils zu einem entsprechenden Punkt der Ist-Kontur der zweiten Ausführung des Bauteils weist. Die genannten Vektoren stehen dabei insbesondere jeweils parallel zueinander und senkrecht auf der Fläche des Soll-Oberflächenmodells. Das dritte Modifikationsmodell umfasst somit einen Modifikationsvektor, der der Richtung der Abweichung der erfassten Kontur von der Sollkontur des Bauteils entgegengerichtet ist und dessen Betrag von den genannten Vektoren bzw. Beträgen abhängt. Insbesondere umfasst das dritte Modifikationsmodell für eine Vielzahl von Oberflächenpunkten des zweiten Oberflächenmodells jeweils einen solchen Modifikationsvektor. Hierbei ist erkannt worden, dass durch Berücksichtigung der Veränderung der Ist-Kontur des Bauteils in Beziehung zu der entsprechenden Veränderung des Werkzeugs ein Werkzeug hergestellt werden kann, das eine sehr genaue form- und maßtreue Fertigung des Bauteils ermöglicht, und wobei häufig keine weiteren Iterationen mehr notwendig sind. Erforderlichenfalls können jedoch weitere Durchläufe des Verfahrens bzw. Iterationen erfolgen, wobei die genannten Schritte jeweils mit um eins erhöhter Ordnungsnummer wiederholt werden, um die Genauigkeit weiter zu steigern.

Vorzugsweise wird das zuvor beschriebene Verfahren in so vielen Durchläufen bzw. Iterationen durchgeführt, bis die Abweichungen zwischen der erfassten Kontur des gefertigten Bauteils und der Sollkontur des Bauteils unterhalb einer vorgegebenen Toleranz liegen. Das Verfahren wird dabei somit nach dem Schritt des Erfassens der Kontur des gefertigten Bauteils beendet, sofern die dabei ermittelten Abweichungen innerhalb der vorgegebenen Toleranzen liegen. Insbesondere kann es vorgesehen sein, dass aus den erfassten Abweichungen bestimmte Abweichungswerte herausgegriffen oder aufgrund der erfassten Abweichungen Maß- oder Formgenauigkeitsparameter ermittelt werden, die auf die Einhaltung der vorgegebenen Toleranzen überprüft werden und wobei bei Einhaltung der Toleranzen das Verfahren zur Herstellung des Werkzeugs beendet wird.

Gemäß einer bevorzugten Ausführungsform des erfindungsgemäßen Verfahrens ist es vorgesehen, dass das erste Modifikationsmodell zumindest bereichsweise als Modifikation einer Parametrierung des Soll-Oberflächenmodells des Bauteils ermittelt wird. Durch eine solche Parametrierung, die auch als Parametrisierung oder als Parameterdarstellung bezeichnet wird, kann die Sollkontur des Bauteils insgesamt oder von Oberflächenbereichen des Bauteils zumindest näherungsweise mit Hilfe von einem oder mehreren Parametern beschrieben werden, etwa durch den Abstand, die Größe oder auch einen Formparameter von Teilstrukturen des Bauteils. Das erste Modifikationsmodell stellt dann eine Modifikation der Parametrierung dar, also eine Modifikation des mindestens einen zur Beschreibung benutzten Parameters, wobei die Modifikation aufgrund der vorbekannten Eigenschaften und/oder des Fertigungsprozesses des Bauteils erfolgt. Hierdurch wird es ermöglicht, auf besonders einfache Weise eine erste Ausführung des Werkzeugs herzustellen, die in den weiteren Verfahrensschritten die Herstellung eines Schwund- und verzugskompensierten Werkzeugs mit besonders wenigen Iterationen ermöglicht.

Alternativ oder zusätzlich kann es vorgesehen sein, dass das zweite Modifikationsmodell und/oder, sofern entsprechende Iterationsschritte durchgeführt werden, das dritte und/oder mindestens ein weiteres Modifikationsmodell zumindest bereichsweise als Modifikation einer Parametrierung des Soll-Oberflächenmodells des Bauteils ermittelt wird. Dabei wird die Modifikation der Parametrierung, die das zweite Modifikationsmodell darstellt, aufgrund der Abweichungen zwischen der erfassten Kontur der ersten Ausführung des Bauteils und dem Soll-Oberflächenmodell des Bauteils sowie aufgrund des ersten Modifikationsmodells ermittelt. Die Modifikation der Parametrierung gemäß dem dritten Modifikationsmodell wird aufgrund des zweiten Modifikationsmodells und der Abweichung zwischen der erfassten Kontur der ersten Ausführung und der der zweiten Ausführung des Bauteils ermittelt; entsprechendes mit jeweils um eins erhöhten Ordnungsnummern gilt für ein ggf. ermitteltes weiteres Modifikationsmodell.

In besonders bevorzugter Weise wird das erste Modifikationsmodell derart bestimmt, dass an jedem Punkt der Oberfläche des Werkzeugs, der einem Punkt auf der Oberfläche des Bauteils entspricht, noch ein Bearbeitungsaufmaß besteht, so dass in den weiteren Verfahrensschritten, in denen das Werkzeug gemäß einem modifizierten Oberflächenmodell bearbeitet wird, das Werkzeug durch Nachbearbeitung mittels Materialabtrag hergestellt werden kann, insbesondere allein mittels Materialabtrag. Hierfür kann es beispielsweise vorgesehen sein, dass bei der Berechnung des ersten Modifikationsmodells ein vorgegebenes Bearbeitungsaufmaß berücksichtigt wird. Das erste Modifikationsmodell kann somit dadurch erstellt werden, dass vorzugsweise in jedem Punkt des Modifikationsmodells zusätzlich zu einem aufgrund der vorbekannten Eigenschaften des Bauteils oder des Fertigungsprozesses ermittelten Anteils des Modifikationsvektors ein weiterer Anteil des Modifikationsvektors addiert wird, der dem vorgegebenen Bearbeitungsaufmaß an der Oberfläche des Werkzeugs entspricht. In entsprechender Weise kann eine Berücksichtigung eines Bearbeitungsaufmaßes bei der Erstellung des zweiten Modifikationsmodells sowie ggf. weiterer Modifikationsmodelle erfolgen. Hierdurch kann gewährleistet werden, dass für die Herstellung eines Werkzeugs, das eine form- und maßgenaue Fertigung des Bauteils ermöglicht, lediglich ein sukzessives Abtragen des Materials des Werkzeugs notwendig ist, wodurch der Zeit- und Kostenaufwand weiter reduziert wird.

Alternativ oder zusätzlich kann es vorgesehen sein, dass das erste Modifikationsmodell sowie ggf. vorzugsweise weitere Modifikationsmodelle so bestimmt werden, dass eine entsprechende Modifikation des Werkzeugs durch ein Biegen des Werkzeugs erreichbar ist, beispielsweise alleine durch Biegen oder auch durch Biegen und Materialabtrag. Auch hierdurch kann eine besonders einfache und rasche Durchführung des Verfahrens erreicht werden.

Eine erfindungsgemäße Vorrichtung zum Herstellen eines Urform- oder Umformwerkzeugs für ein zu fertigendes Bauteil umfasst eine Prozessoreinrichtung, beispielsweise einen Computer oder ein Computersystem, die zum Ansteuern einer NC- oder CNC-Maschine zum Herstellen eines Ur- oder Umformwerkzeugs gemäß einem Oberflächenmodell und zum Empfangen von Daten eines Koordinatenmessgeräts, insbesondere eines computertomografischen Koordinatenmessgeräts, die eine erfasste Kontur eines mit dem Ur- oder Umformwerkzeug gefertigten Bauteils dreidimensional darstellen, ausgebildet ist und wobei die Prozessoreinrichtung zum Erstellen des Oberflächenmodells des Ur- bzw. Umformwerkzeugs gemäß dem zuvor beschriebenen Verfahren eingerichtet ist. Die Vorrichtung kann ferner zum Ansteuern eines oder mehrerer Handhabungs- und/oder Fertigungsvorrichtungen ausgebildet sein, um ein mit dem Ur- oder Umformwerkzeug gefertigtes Bauteil im Rahmen des beschriebenen Verfahrens zu handhaben und zu fertigen. Die Vorrichtung kann auch die NC- bzw. CNC-Maschine und/oder das Koordinatenmessgerät sowie ggf. die Handhabungs- bzw. Fertigungsvorrichtungen umfassen.

Gemäß einem weiteren Aspekt betrifft die vorliegende Erfindung ein Verfahren zum Fertigen eines Bauteils mittels eines urform- oder umformtechnischen Herstellungsprozesses, wobei ein Urform- bzw. Umformwerkzeug gemäß dem zuvor beschriebenen Verfahren hergestellt wird und das Bauteil mittels des Urform- bzw. Umformwerkzeugs gefertigt wird. Das Verfahren zum Fertigen des Bauteils kann weitere Verfahrensschritte umfassen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Weitere Aspekte der Erfindung ergeben sich aus der nachfolgenden Beschreibung bevorzugter Ausführungsbeispiele und der beigefügten Zeichnung. Es zeigen:

Fig. 1 schematisch einen Schnitt durch einander entsprechende Oberflächenbereiche eines Werkzeugs und eines Bauteils gemäß einem Beispiel eines erfindungsgemäßen Verfahrens;

Fig. 2 eine Darstellung entsprechend Fig. 1 für ein weiteres Werkzeug und ein entsprechendes Bauteil;

Fig. 3 schematisch einen Schnitt durch einander entsprechende Oberflächenbereiche eines Werkzeugs und eines Bauteils gemäß Fig. 1, wobei weitere Verfahrensschritte gemäß einem Beispiel eines erfindungsgemäßen Verfahrens dargestellt sind;

Fig. 4a und 4b schematisch einen Schnitt durch eine Biegeform und ein durch Biegen umzuformendes Bauteil sowie Fig. 4c Verfahrensschritte beim Herstellen der Biegeform gemäß einem weiteren Beispiel des erfindungsgemäßen Verfahrens.

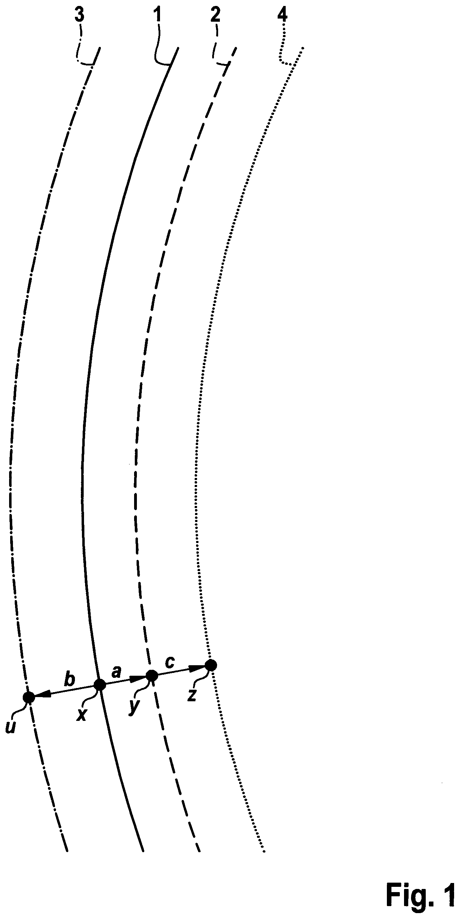

In Fig. 1 ist der Ablauf des erfindungsgemäßen Verfahrens beispielhaft dargestellt. Dabei stellt die durchgezogene Linie 1 die Sollkontur eines Bauteils dar, d.h. die Nominalgeometrie oder das Soll-Oberflächenmodell. Die gestrichelte Linie 2 symbolisiert die Kontur eines Ur- oder Umformwerkzeugs zur Fertigung des Bauteils, wobei sich bereits die dargestellte erste Ausführung des Werkzeugs um das erste Modifikationsmodell von dem Soll-Oberflächenmodell (Linie 1) unterscheidet; dieser Unterschied wird auch als "Vorhaltung" bezeichnet. Das erste Modifikationsmodell umfasst somit einen Vektor $a$, der ausgehend von einem Oberflächenpunkt $x$ des Soll-Oberflächenmodells einen entsprechenden Oberflächenpunkt $y$ der ersten Ausführung des Werkzeugs angibt. Der Vektor $a$ steht senkrecht auf der Oberfläche. Der Betrag des Vektors $a$ wird aus vorbekannten Eigenschaften des Werkstücks sowie des Fertigungsverfahrens bestimmt und stellt eine Annäherung an diejenige Kontur des Werkzeugs dar, die eine form- und maßgetreue Fertigung des Bauteils ermöglichen würde, wobei zusätzlich berücksichtigt wird, dass noch ein Bearbeitungsaufmaß vorhanden ist, um in weiteren Schritten durch Materialabtrag eine weitere Annäherung an eine solche Kontur erreichen zu können. Im gezeigten Beispiel weist das Werkzeug eine konvexe Kontur auf, während das Bauteil im entsprechenden Oberflächenbereich konkav geformt ist.

Wird mit der ersten Ausführung des Werkzeugs (Linie 2) ein Bauteil gefertigt, so weicht dessen Kontur aufgrund von Schwund und/oder Verzug von der des Werkzeugs (Linie 2) ab; die Kontur der auf diese Weise gefertigten ersten Ausführung des Bauteils ist in Fig. 1 strichpunktiert dargestellt (Linie 3). In dem Punkt $u$ der Oberfläche der ersten Ausführung des Bauteils, der dem Punkt $x$ des Soll-Oberflächenmodells entspricht, unterscheidet sich dessen Kontur, d.h. die Ist-Kontur, von der Sollkontur um den Vektor $b$. Der Abweichungsvektor $b$ steht ebenfalls senkrecht auf der Fläche des Soll-Oberflächenmodells. Die Abweichung $b$ im Punkt $x$ sowie die Abweichungen in anderen Punkten werden durch Vermessung der ersten Ausführung des Bauteils mit einem Koordinatenmessgerät, insbesondere mit einem computertomografischen Messgerät, erfasst.

Im nächsten Verfahrensschritt wird eine Kontur des Werkzeugs gemäß einer zweiten Ausführung des Werkzeugs ermittelt, die in Fig. 1 als punktierte Linie 4 dargestellt ist. Ausgehend vom Punkt $y$ der Kontur der ersten Ausführung des Werkzeugs wird dabei ein entsprechender Punkt $z$ ermittelt, der sich von dem entsprechenden Punkt $y$ der ersten Ausführung des Werkzeugs (Vektor $a$) um den weiteren Vektor c unterscheidet, d.h.

$$z = x + a + c \, .$$

Der Vektor $a$ ist ein Modifikationsvektor des ersten Modifikationsmodells, und der Vektor $c$ der entsprechende Modifikationsvektor des zweiten Modifikationsmodells. Der Modifikationsvektor $c$ kann dabei gemäß einer Ausführungsform des Verfahrens derart ermittelt werden, dass

$$c = - \, b \, f \, ,$$

d.h. die Richtung des Vektors $c$ ist durch $-b$ bestimmt, der Vektor $c$ ist also der an der Sollkontur bzw. dem ersten Oberflächenmodell gespiegelte und in seinem Betrag um den Faktor $f$ veränderte Vektor $b$. Der Faktor $f$ kann den Wert 1 haben, ist aber vorzugsweise von 1 verschieden und etwa von dem Betrag der Vektoren $a$ und/oder ($b$ - $a$) abhängig; bei ggf. notwendigen weiteren Iterationen kann $f$ unterschiedlich bestimmt werden. Der Faktor $f$ kann beispielsweise auch einen Schwindungsfaktor enthalten, der etwa bereichsweise unterschiedliche Materialstärken beim Spritzgießen berücksichtigt.

Wie in Fig. 1 erkennbar ist, ist der Vektor $a$, um den sich bereits die erste Ausführung des Werkzeugs von dem Soll-Oberflächenmodell entspricht, unterscheidet, derart gewählt, dass in weiteren Schritten auf jeden Fall noch ein Bearbeitungsaufmaß verbleibt. Das notwendige Bearbeitungsaufmaß für die erste Iteration ist im gezeigten Beispiel durch den Betrag des Vektors $c$ gegeben. Ferner kann durch die beschriebene Ermittlung des Vektors $c$ in einfacher Weise erreicht werden, dass die Kontur der zweiten Ausführung des Werkzeugs (Linie 4) bereits recht genau einer solchen Kontur entspricht, die eine maßgenaue Fertigung des Bauteils ermöglicht; auch hierbei kann jedoch noch ein Bearbeitungsaufmaß vorgesehen sein.

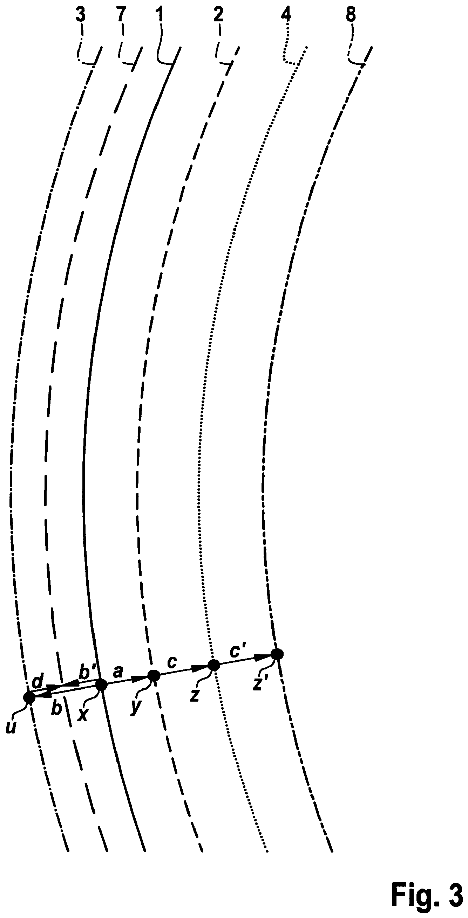

Mit der zweiten Ausführung des Werkzeugs, die der Linie 4 entspricht, kann eine zweite Ausführung des Bauteils gefertigt werden, das in höherem Maße der Sollkontur entspricht. Wie unten anhand von Fig. 3 erläutert wird, kann gemäß einem weiteren Beispiel des erfindungsgemäßen Verfahrens in einer nachfolgenden Iteration eine Abweichung zwischen der Ist-Kontur der ersten Ausführung des Bauteils (Linie 3) und einer erfassten Ist-Kontur der zweiten Ausführung des Bauteils in Beziehung zum Betrag des Modifikationsvektors $c$ des zweiten Modifikationsmodells gesetzt werden, und ein drittes Modifikationsmodell ermittelt werden, wobei dessen Modifikationsvektor hiervon abhängig ist.

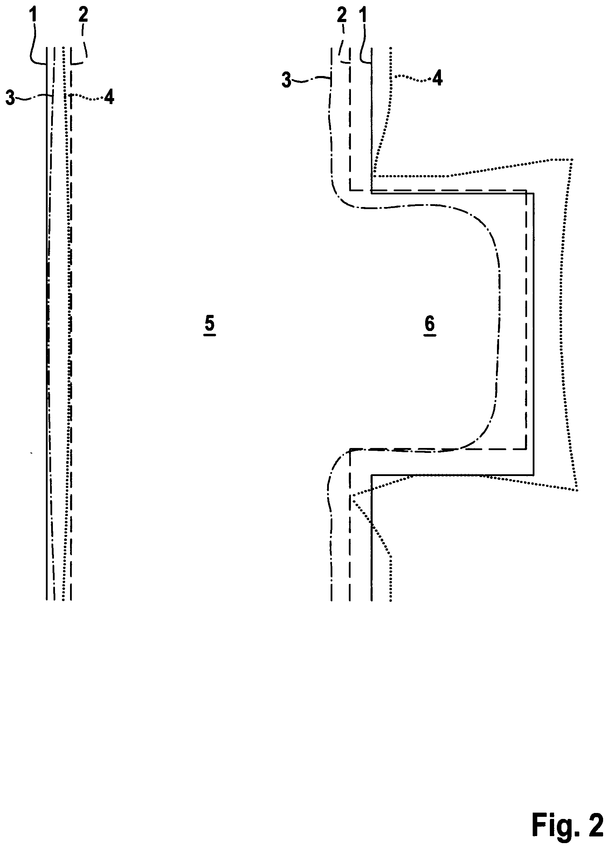

In Fig. 2 ist eine komplexere Geometrie dargestellt, wobei das zu fertigende Bauteil eine Wand 5 mit einem Vorsprung 6 aufweist. Der Vorsprung 6 hat gemäß der Nominalgeometrie eine rechteckige Querschnittsform. Entsprechend wie in Fig. 1 sind in Fig. 2 das Soll-Oberflächenmodell (Linie 1), die Kontur der ersten Ausführung des Werkzeugs (Linie 2), die Ist-Kontur der ersten Ausführung des Bauteils (Linie 3) und die Kontur der zweiten Ausführung des Werkzeugs (Linie 4) dargestellt. Auch dabei wird die Kontur des Werkzeugs, die eine form- und maßgenaue Fertigung des Bauteils ermöglicht, aufgrund eines Modifikationsmodells ermittelt, das aufgrund der Abweichungen zwischen der erfassten tatsächlichen Kontur der ersten Ausführung des Bauteils und der Sollkontur des Bauteils und dem ersten Modifikationsmodell erstellt wird. Zusätzlich kann es vorgesehen sein, dass in Bereichen hoher Krümmung auch das zweite Oberflächenmodell des Werkzeugs eine hohe Krümmung aufweist. Insbesondere dann, wenn die Istkontur erheblich von der Sollkontur abweicht, kann es vorteilhaft sein, die Modifikationsvektoren des ersten und/oder des zweiten Modifikationsmodells derart zu wählen, dass sie nicht unbedingt senkrecht auf dem Soll-Oberflächenmodell stehen.

In Fig. 3 sind weitere Verfahrensschritte dargestellt, die die Herstellung eines schwund- und verzugskompensierten Werkzeugs mit gesteigerter Genauigkeit und mit besonders wenigen Iterationen ermöglichen. Dabei wird von der in Fig. 1 gezeigten Situation und den dort dargestellten Verfahrensschritten ausgegangen; die Linien 1-4 haben in Fig. 3 die gleiche Bedeutung wie in Fig. 1. Das Verfahren gemäß Fig. 3 kann in entsprechender Weise auch für komplexere Geometrien, etwa die in Fig. 2 gezeigte, durchgeführt werden.

Gemäß dem zuvor beschriebenen Verfahren ist das zweite Modifikationsmodell ermittelt worden, dass in Fig. 3 wie in Fig. 1 durch den Modifikationsvektor c dargestellt ist. Das entsprechende zweite Oberflächenmodell des Werkzeugs entsteht durch Modifikation des ersten Oberflächenmodells des Werkzeugs (Linie 2) mit dem zweiten Modifikationsmodell, im gezeigten Beispiel mit dem Vektor c. Die zweite Ausführung des Werkzeugs wird entsprechend dem zweiten Oberflächenmodell gefertigt, dessen Kontur in Fig. 3 als punktierte Linie 4 dargestellt ist. Mit der zweiten Ausführung des Werkzeugs wird nun eine zweite Ausführung des Bauteils gefertigt. Die Kontur der zweiten Ausführung des Bauteils (Linie 7) weicht von der der ersten Ausführung des Bauteils (Linie 3) ab und kann auch immer noch von der Sollkontur (Linie 1) abweichen. Im gezeigten Beispiel wird die Abweichung der zweiten Ausführung des Bauteils (Linie 7) von der ersten Ausführung des Bauteils (Linie 3), ausgehend vom Punkt *u*, durch den Vektor *d* dargestellt, und die Abweichung der zweiten Ausführung des Bauteils (Linie 7) von der Sollkontur (Linie 1), ausgehend vom Punkt x, durch den Vektor *b'*. Dabei gilt:

$$b' = b + d$$

Die Abweichung der zweiten Ausführung des Bauteils von der Sollkontur ist, wie in Fig. 3 gezeigt, betragsmäßig geringer als die der ersten Ausführung des Bauteils, jedoch noch von Null verschieden.

Nunmehr wird gemäß dem in Fig. 3 dargestellten Beispiel die Abweichung zwischen der Ist-Kontur der ersten Ausführung des Bauteils (Linie 3) und der Ist-Kontur der zweiten Ausführung des Bauteils (Linie 7) in Beziehung zum Betrag des Modifikationsvektors *c* des zweiten Modifikationsmodells gesetzt, und ein drittes Modifikationsmodell ermittelt, wobei dessen Modifikationsvektor *c'* von diesem Verhältnis abhängig ist. Dabei ist der Modifikationsvektor *c'* des dritten Modifikationsmodells parallel zu dem Modifikationsvektor *c* des zweiten Modifikationsmodells und entgegengesetzt parallel zu dem Abweichungsvektor *b'*, ist gegenüber diesem jedoch um einen Faktor f' verändert:

$$c' = - b' f'$$

mit

$$f' = |c| / |d|,$$

d.h.

$$c' = - b' |c| / |d|.$$

Der in dieser Iteration berechnete Faktor *f'*, mit dem die Abweichung *b'* zwischen der Ist-Kontur der zweiten Ausführung des Bauteils (Linie 7) von der Sollkontur (Linie 1) multipliziert wird, um den Betrag des Modifikationsvektors *c'* des dritten Modifikationsmodells zu erhalten, ist somit durch das Verhältnis zwischen dem Betrag des Modifikationsvektors *c* des zweiten Modifikationsmodells und dem Betrag der Abweichung *d* zwischen den Ist-Konturen der ersten und der zweiten Ausführung des Bauteils gegeben.

Mit dem dritten Modifikationsmodell wird nun ein drittes Oberflächenmodell des Werkzeugs berechnet (in Fig. 3 durch die doppelt strichpunktierte Linie 8 dargestellt):

$$z' = z + c' = x + a + c + c'.$$

Im nächsten Schritt wird eine dritte Ausführung des Werkzeugs entsprechend dem dritten Oberflächenmodell (Linie 8) gefertigt. Mit der dritten Ausführung des Werkzeugs kann eine dritte Ausführung des Bauteils gefertigt werden. Die Kontur der dritten Ausführung des Bauteils entspricht in der Regel bereits sehr genau der Soll-kontur (Linie 1). Ggf. kann in entsprechender Weise in weiteren Iterationen vorgegangen werden, um die Form- und Maßhaltigkeit des gefertigten Bauteils weiter zu erhöhen. Auf diese Weise wird eine Herstellung eines schwund- und verzugskompensierten Werkzeugs mit besonders wenigen Iterationen ermöglicht.

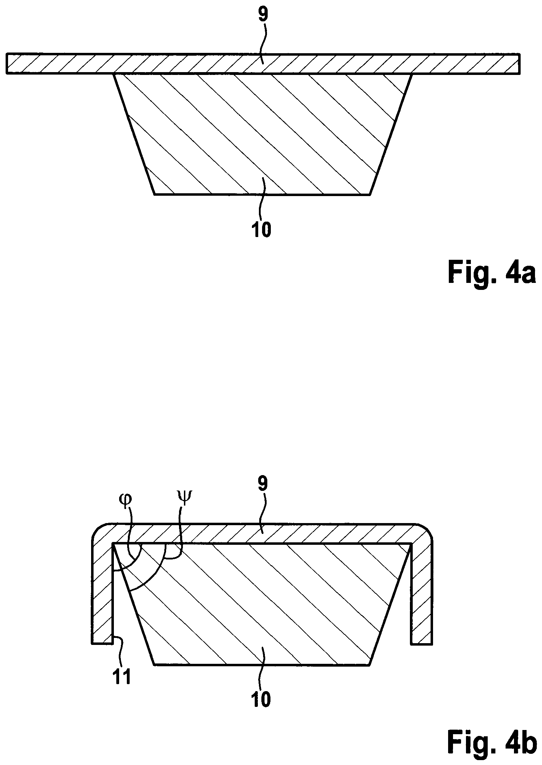

In den Figuren 4a bis 4c ist beispielhaft ein erfindungsgemäßes Verfahren zum Herstellen eines Umformwerkzeugs gezeigt. Gemäß dem dargestellten Beispiel ist das Bauteil ein zunächst ebenes Blech 9 (s. Fig. 4a), das durch Biegen an einer Biegeform 10 in eine umgekehrt U-förmige Gestalt gebracht wird (Fig. 4b). Beim Biegeprozess werden seitliche Abschnitte des Blechs 9 beispielsweise mit Hilfe nicht dargestellter verschieb- oder schwenkbarer Backen gegen entsprechende Oberflächenbereiche der Biegeform 10 angedrückt. Die Biegekante der Biegeform ist der Einfachheit halber als scharfe Kante dargestellt, kann jedoch auch abgerundet sein. Durch elastisches Rückfedern liegen die Innenseiten 11 der umgebogenen Abschnitte des Blechs 9 nach Wegnahme der Backen nicht mehr an der Biegeform 10 an. Der Winkel ψ der Biegekante der Biegeform 10, an der das Blech 9 beim Anstellen der Backen gebogen wird, ist daher kleiner als der Soll-Winkel φ zu wählen.

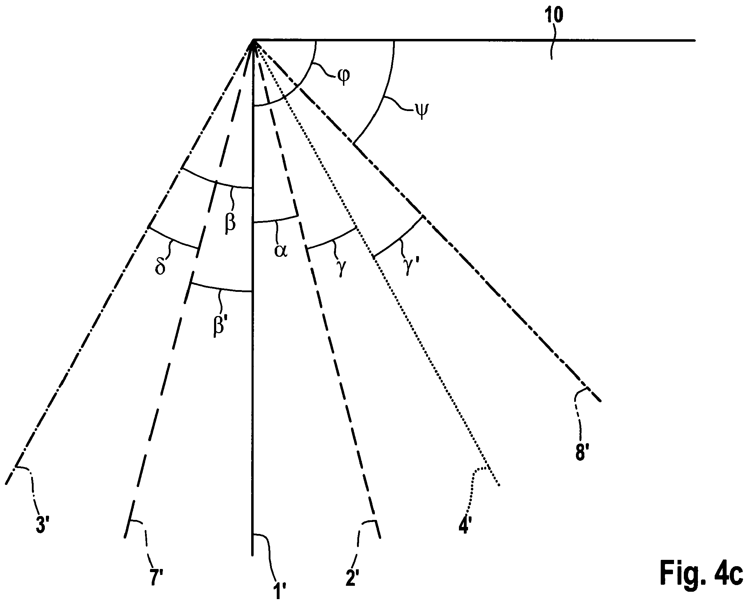

In Fig. 4c ist der Bereich der linken Biegekante aus Fig. 4b vergrößert gezeigt, wobei die Schritte zur Ermittlung des Winkels ψ der Biegekante in entsprechender Weise wie in Fig. 3 dargestellt sind. Der Winkel ψ stellt bei diesem Beispiel eine einfache Parametrierung der Kontur des Werkzeugs dar, in diesem Fall der Biegeform 10.

Der Soll-Winkel, d.h. der Soll-Biegewinkel, den die Innenseite 11 des Blechs 9 mit der Oberseite des Blechs bildet, ist durch den Winkel φ und die entsprechende Soll-Kontur der Innenseite 11 des Blechs 9 durch die durchgezogene Linie 1' dargestellt. Die gestrichelte Linie 2' symbolisiert die Kontur des Umformwerkzeugs, nämlich der Biegeform 10, gemäß einer ersten Ausführung des Werkzeugs. Diese unterscheidet sich bereits um den Vorhaltewinkel α von dem Soll-Winkel φ. Das erste Modifikationsmodell ist somit durch den als Parameter dienenden Winkel α gegeben. Der Betrag des Winkels α wird aus vorbekannten Eigenschaften des Werkstücks, beispielsweise aus der vorherigen Kenntnis der Prozesse beim Biegen und des Rückfederns des Blechs 9 bestimmt.

Wird mit der ersten Ausführung des Werkzeugs (Linie 2') das Blech 9 umgeformt, so weicht dessen Kontur aufgrund des Rückfederns von der des Werkzeugs (Linie 2') ab und ist im gezeigten Beispiel durch die strichpunktierte Linie 3' gegeben, die in einem Winkel β zur Sollkontur steht. Der Winkel β wird messtechnisch erfasst.

Im nächsten Verfahrensschritt wird die Kontur des Werkzeugs gemäß einer zweiten Ausführung des Werkzeugs ermittelt, die in Fig. 1 als punktierte Linie 4' dargestellt ist. Diese unterscheidet sich von der Kontur der ersten Ausführung der Biegeform 10 um einen Winkel γ, der näherungsweise der Abweichung der ersten Ausführung des Bauteils von der Sollkontur, d.h. dem Winkel β, entsprechen kann, jedoch vorzugsweise sich von diesem um einen Faktor f unterscheidet:

$$\gamma = \beta f,$$

wobei f ungleich 1 ist. Dabei kann beispielsweise f in einem Bereich

$$1 < f < (\beta + \alpha) / \beta$$

gewählt werden, beispielsweise etwa in der Mitte des angegebenen Bereichs, insbesondere derart, dass stets ein Bearbeitungsaufmaß zur Anpassung der Biegeform 10 bestehen soll.

Das Werkzeug wird nun entsprechend modifiziert, und eine zweite Ausführung der Biegeform 10 erstellt (Linie 4'). Mit der zweiten Ausführung der Biegeform 10 wird eine zweite Ausführung des Bauteils gefertigt, d. h. ein ebenes Blech 9 wird an der Biegekante 10 gebogen. Dieses weist eine Kontur auf, die in Fig. 4c durch die lang gestrichelte Linie 7' dargestellt ist und die sich von der der ersten Ausführung des Bauteils um den Winkel δ und von der Sollkontur um den Winkel β' unterscheidet, wobei β' bereits deutlich kleiner als β ist.

In einem weiteren Iterationsschritt wird nun das Verhältnis der Veränderung des Winkels der Biegeform von der ersten zur zweiten Ausführung des Werkzeugs, d.h. des Winkels γ, zur entsprechenden Veränderung der Ist-Kontur der ersten zur zweiten Ausführung des Bauteils, d.h. des Winkels δ, gebildet, und ein Faktor f' ermittelt:

$$f' = \gamma / \delta ,$$

mit dem ein Modifikationswinkel γ' berechnet wird:

$$\gamma' = \beta' f'$$

Weiter wird eine dritte Ausführung des Werkzeugs erstellt, die sich von der zweiten Ausführung des Werkzeugs um den Modifikationswinkel γ' unterscheidet (in Fig. 4c durch die doppelt strichpunktierte Linie 8' dargestellt). Mit der dritten Ausführung des Werkzeugs kann nun eine dritte Ausführung des Bauteils gefertigt werden. Die Kontur eines Bauteils, das durch Biegen eines ebenen Blechs 9 an der Biegekante der Biegeform 10 entsteht, wobei der Winkel der Biegekante

$$\psi = \varphi - \alpha - \gamma - \gamma'$$

ist, entspricht sehr genau der Sollkontur mit dem Soll-Winkel φ.

Im beschriebenen Beispiel sind beispielsweise

φ = 90°
α = 3°
β = 6°
f = 1,25
γ = 7,5°
δ = 5°
β' = 1°
f' = 1,5
γ' = 1,5°

Die Winkel sind in Fig. 4c nicht maßstäblich dargestellt.

Der Übersichtlichkeit halber sind nicht in allen Figuren alle Bezugszeichen dargestellt. Zu einer Figur nicht erläuterte Bezugszeichen haben die gleiche Bedeutung wie in den übrigen Figuren.

Bezugszeichenliste

| | |
|---|---|
| 1, 1' | Linie |
| 2, 2' | Linie |
| 3, 3' | Linie |
| 4, 4' | Linie |
| 5 | Wand |
| 6 | Vorsprung |
| 7, 7' | Linie |
| 8, 8' | Linie |
| 9 | Blech |
| 10 | Biegeform |
| 11 | Innenseite |

**Patentansprüche**

1. Verfahren zum Herstellen eines Urform- oder Umformwerkzeugs für ein Bauteil, umfassend folgende Schritte:

(a) Bereitstellen eines Soll-Oberflächenmodells des Bauteils,
(b) Erstellen eines ersten Modifikationsmodells des Werkzeugs aufgrund von vorbekannten Eigenschaften des Bauteils und/oder des Fertigungsprozesses des Bauteils,
(c) Erstellen eines ersten Oberflächenmodells des Werkzeugs durch Modifizieren des Soll-Oberflächenmodells des Bauteils mit dem ersten Modifikationsmodell,
(d) Herstellen einer ersten Ausführung des Werkzeugs entsprechend dem ersten Oberflächenmodell,
(e) Fertigen einer ersten Ausführung des Bauteils mit der ersten Ausführung des Werkzeugs,
(f) Erfassen der Kontur der ersten Ausführung des Bauteils,
(g) Ermitteln von Abweichungen zwischen der erfassten Kontur der ersten Ausführung des Bauteils und dem Soll-Oberflächenmodell des Bauteils,
(h) Erstellen eines zweiten Modifikationsmodells aufgrund der ermittelten Abweichungen und dem ersten Modifikationsmodell,
(i) Erstellen eines zweiten Oberflächenmodells des Werkzeugs durch Modifizieren des ersten Oberflächenmodells mit dem zweiten Modifikationsmodell,

(j) Herstellen einer zweiten Ausführung des Werkzeugs entsprechend dem zweiten Oberflächenmodell.

2. Verfahren nach Anspruch 1, **dadurch gekennzeichnet, dass** das zweite Modifikationsmodell einen Modifikationsvektor c umfasst, der der Richtung der Abweichung der erfassten Kontur von dem Soll-Oberflächenmodell des Bauteils entgegengerichtet ist und dessen Betrag von dem Betrag der Abweichung zwischen dem ersten Oberflächenmodell des Werkzeugs und der erfassten Ist-Kontur der ersten Ausführung des Bauteils abhängt.

3. Verfahren nach Anspruch 1 oder 2, **dadurch gekennzeichnet, dass** nach Schritt (j) die Schritte (e) bis (j) in einem oder mehreren Durchläufen wiederholt werden, wobei die Ordnungsnummern der Ausführung des Bauteils, der Ausführung des Werkzeugs, des Modifikationsmodells und des Oberflächenmodells jeweils um eins erhöht werden.

4. Verfahren nach Anspruch 3, **dadurch gekennzeichnet, dass** das dritte Modifikationsmodell einen Modifikationsvektor umfasst, der der Richtung der Abweichung der erfassten Kontur der zweiten Ausführung des Bauteils von dem Soll-Oberflächenmodell des Bauteils entgegengerichtet ist und dessen Betrag dem Betrag dieser Abweichung multipliziert mit einem Faktor ($f$) entspricht, der vom zweiten Modifikationsmodell und der Abweichung zwischen der erfassten Kontur der ersten Ausführung des Bauteils und der erfassten Kontur der zweiten Ausführung des Bauteils abhängt.

5. Verfahren nach Anspruch 4, **dadurch gekennzeichnet, dass** der Faktor ($f$) zumindest näherungsweise gleich dem Verhältnis des Betrags des Modifikationsvektors des zweiten Modifikationsmodells zu dem Betrag der Abweichung zwischen der erfassten Kontur der ersten Ausführung des Bauteils und der erfassten Kontur der zweiten Ausführung des Bauteils ist.

6. Verfahren nach einem der Ansprüche 3 bis 5, **dadurch gekennzeichnet, dass** die Schritte (e) bis (j) so oft wiederholt werden, bis die Abweichungen innerhalb vorgegebener Toleranzen liegen.

7. Verfahren nach einem der vorhergehenden Ansprüche, **dadurch gekennzeichnet, dass** das erste, das zweite, das dritte und/oder mindestens ein weiteres Modifikationsmodell zumindest bereichsweise als Modifikation einer Parametrierung des Soll-Oberflächenmodells des Bauteils ermittelt wird.

8. Verfahren nach einem der vorhergehenden Ansprüche, **dadurch gekennzeichnet, dass** das erste Modifikationsmodell so bestimmt wird, dass die zweite Ausführung des Werkzeugs durch Materialabtrag herstellbar ist.

9. Verfahren nach einem der vorhergehenden Ansprüche, **dadurch gekennzeichnet, dass** das erste Modifikationsmodell so bestimmt ist, dass die zweite Ausführung des Werkzeugs durch Biegen des Werkzeugs herstellbar ist.

10. Vorrichtung zum Herstellen eines Urform- oder Umformwerkzeugs für ein Bauteil, umfassend eine Prozessoreinrichtung, die zum Ansteuern einer NC- oder CNC-Maschine zum Herstellen eines Ur- oder Umformwerkzeugs gemäß einem Oberflächenmodell und zum Empfangen von Daten eines Koordinatenmessgeräts, die eine erfasste Kontur eines mit dem Ur- oder Umformwerkzeug gefertigten Bauteils darstellen, ausgebildet ist, **dadurch gekennzeichnet, dass** die Prozessoreinrichtung zum Erstellen des Oberflächenmodells des Ur- oder Umformwerkzeugs gemäß einem Verfahren nach einem der Ansprüche 1 bis 9 eingerichtet ist.

11. Verfahren zum Fertigen eines Bauteils mittels eines urform- oder umformtechnischen Herstellungsprozesses, wobei ein Urform- bzw. Umformwerkzeug mit einem Verfahren gemäß einem der Ansprüche 1 bis 9 hergestellt wird und das Bauteil mittels des Urform- bzw. Umformwerkzeugs gefertigt wird.

Fig. 1

**Fig. 2**

**Fig. 3**

**Fig. 4a**

**Fig. 4b**

**Fig. 4c**

EP 3 611 582 A1

**Europäisches Patentamt**
**European Patent Office**
**Office européen des brevets**

# EUROPÄISCHER RECHERCHENBERICHT

Nummer der Anmeldung

EP 19 00 0362

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X,D | DE 10 2016 207821 A1 (GM GLOBAL TECH OPERATIONS LLC [US]) 10. November 2016 (2016-11-10) * Absätze [0019], [0021], [0023], [0035], [0036]; Abbildung 1 * ----- | 1-11 | INV. G05B19/18 G05B19/404 G05B19/401 B29C33/38 |
| A | DE 10 2007 050316 A1 (HACHTEL STEFFEN [DE]) 23. April 2009 (2009-04-23) * Absätze [0006], [0008], [0009], [0018], [0019], [0021] - [0024] * ----- | 1-11 | |
| A,D | DE 10 2011 121695 A1 (JENOPTIK POLYMER SYSTEMS GMBH [DE]) 20. Juni 2013 (2013-06-20) * Absätze [0007], [0012], [0013], [0019], [0021], [0022]; Anspruch 1; Abbildung 1 * ----- | 1-11 | |
| A,D | EP 2 313 867 A1 (ZEISS IND MESSTECHNIK GMBH [DE]) 27. April 2011 (2011-04-27) * Absätze [0009] - [0011], [0016], [0030]; Abbildung 4 * ----- | 1-11 | RECHERCHIERTE SACHGEBIETE (IPC) G05B B29C |

Der vorliegende Recherchenbericht wurde für alle Patentansprüche erstellt

| Recherchenort | Abschlußdatum der Recherche | Prüfer |
|---|---|---|
| Den Haag | 20. Dezember 2019 | Salvador, Didier |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 00 0362

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-12-2019

| Im Recherchenbericht angeführtes Patentdokument | Datum der Veröffentlichung | Mitglied(er) der Patentfamilie | Datum der Veröffentlichung |
|---|---|---|---|
| DE 102016207821 A1 | 10-11-2016 | CN 106393506 A<br>DE 102016207821 A1<br>US 2016325468 A1 | 15-02-2017<br>10-11-2016<br>10-11-2016 |
| DE 102007050316 A1 | 23-04-2009 | KEINE | |
| DE 102011121695 A1 | 20-06-2013 | KEINE | |
| EP 2313867 A1 | 27-04-2011 | AT 534104 T<br>CN 102105908 A<br>DE 102008034117 A1<br>EP 2313867 A1<br>JP 2011528829 A<br>US 2011130854 A1<br>WO 2010009840 A1 | 15-12-2011<br>22-06-2011<br>04-02-2010<br>27-04-2011<br>24-11-2011<br>02-06-2011<br>28-01-2010 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2313867 B1
- DE 102011121695 A1
- DE 102016207821 A1